# EUROPEAN PATENT APPLICATION

(11) **EP 1 884 494 A1**
(43) Date of publication of application: **06.02.2008**
(21) Application number: 06117847.1
(22) Date of filing: 26.07.2006
(51) Int. Cl.: C01B 15/10

(54) **Process for the monitoring of solids which release oxygen when decomposing and bulk container**

(71) Applicant: SOLVAY (Société Anonyme), 1050 Bruxelles (BE)
(72) Inventor: The designation of the inventor has not yet been filed
(74) Representative: Jacques, Philippe

(57) **Abstract**

Process for the monitoring of solids which release oxygen when decomposing and which are stored in a bulk container closed to the ambient atmosphere, by measuring oxygen level. Use of this process and container according to this process for the safe storage of such substances.

## Description

The present invention is related to a process for the monitoring of solids which release oxygen when decomposing and which are stored in a bulk container which is closed to the ambient atmosphere. The present invention also relates to the use of this process for the safe storage of such solids and to a bulk container.

It is known that solids which release oxygen when decomposing require particular attention to the issue of safety when stored in bulk containers. Indeed, their capacity to spontaneously decompose during storage in a bulk container can lead to heating of the product and uncontrolled thermal decomposition, also called self-heating.

For example, sodium percarbonate decomposes very slowly if stabilized in an appropriate way. In the last years, many efforts have been done by the manufacturers in order to continuously improve sodium percarbonate stability, for instance by coating it with one or more stabilizing coating layers. Studies have also been made in order to simulate the sodium percarbonate stability in bulk containers, and therefore to draw recommendations to guarantee a safe storage.

For instance, US 6,595,008 discloses a process for the safe storage of sodium percarbonate in bulk containers, in particular in large silos, in which the temperature is measured at at least one position inside the sodium percarbonate stored in bulk and for which, with a temperature increase of from 0.5 to 10°C per day, in particular of from 1 to 5°C per day, dry air is passed periodically or continuously through the bulk material at least until the increase in temperature has fallen to a value of less than 1°C per day, in particular less than 0.5°C per day. When homogenous sodium percarbonate decomposes very slowly over months, temperature will slowly increase, over a certain period, depending on the intrinsic stability of the sodium percarbonate. In that case, when the increase in temperature is detected, there is enough time to empty the silo or to perform other corrective actions.

Unfortunately, it has been found that the above-mentioned process is not sufficient for local fast decompositions of sodium percarbonate which occur at a certain distance from the temperature probes.

Such fast decompositions can be initiated, for example, by a contamination of the bulk container content by rain ingress into the bulk container, by contamination of a silo-truck during transport, or by contamination of sodium percarbonate during the loading or unloading. The silo-truck can for example be contaminated with humidity or with traces of an iron-catalyst in the conveying pipe of the truck.

The purpose of the present invention is to provide a new process for the monitoring of solids which release oxygen when decomposing, in particular sodium percarbonate, stored in a bulk container, such as a silo, which enables an early detection of slow as well as fast decompositions.

The present invention therefore relates to a process for the monitoring of solids which release oxygen when decomposing and which are stored in a bulk container closed to the ambient atmosphere, by measuring oxygen level.

One of the essential features of the present invention resides in the monitoring of the oxygen level instead of monitoring temperature increases, which allows a faster detection of decomposition of the solid stored.

The part of the bulk container above the stored solid contains a gaseous atmosphere, which is called the headspace. In a first embodiment of the process, the oxygen concentration of the atmosphere in the headspace of the bulk container is measured. Indeed, if decomposition of the stored solid occurs, oxygen will be released and the oxygen concentration in the headspace will increase. The evolution of the oxygen concentration can therefore be linked to the stability of the solid stored. If decomposition occurs in the bulk, an increase of the oxygen concentration is detected and one can empty the bulk container or perform other corrective actions.

By monitoring of the oxygen level are intended oxygen concentration measurements, their interpretation and further corrective actions if a predetermined limit is reached or exceeded.

According to the invention, the oxygen concentration measurements can be done periodically, for instance with a frequency of at least one measurement every 24 hours, in particular every 12 hours, for example every 6 hours. The first day after unloading of the truck, the oxygen concentration measurements are preferably done at least every 6 hours, more preferably at least every 4 hours. The oxygen concentration measurements can also be done continuously. Continuous measurements are recommended.

Oxygen concentration measurements are generally done using an oxygen detector equipped with sensors having a measuring range of from 0 to 40 Vol% of oxygen, for example of from 0 to 25 Vol% of oxygen. The accuracy of such detectors is usually about 0.1%, more generally about 0.5%.

In a second embodiment of the invention, a gas-purge is passed through the solid stored in the bulk container and is released to the atmosphere through an opening made in a part of the closed bulk container, called the outlet of the bulk container, said opening positioned away from that where the gas-purge is introduced, thereby allowing the gas-purge to escape via a passage through the mass of the solid stored in bulk into the atmosphere and wherein the oxygen concentration of the gas-purge is measured at the outlet of the bulk container. If decomposition of the solid stored in the bulk container occurs, the released oxygen is drawn along by the gas-purge to the oxygen detector where the oxygen concentration is measured. The evolution of the oxygen concentration can therefore be linked to the stability of the stored material. If decomposition of the solid occurs in the bulk, an increase of the oxygen concentration is detected and one can empty the bulk container or perform other corrective actions.

The process of the invention is suitable for the monitoring of solids which release oxygen when decomposing. Such solids are notably persalts, metal peroxides and solid percarboxylic acids, mixtures thereof, and formulations containing them. Persalts are, for example, sodium percarbonate and sodium perborate monohydrate and tetrahydrate or mixtures thereof. Metal peroxides can be alkakine or alkaline earth metal peroxides, such as, calcium, magnesium and zinc peroxides or mixtures thereof. An example of solid percarboxylic acids is the N,N'-phthaloylaminoperoxycaproic acid. Formulations containing such solids are for example detergent or bleach booster formulations.

The inventive process is especially suitable for uncoated sodium percarbonate particles as well as for sodium percarbonate particles coated with one or more coating layers. The coating agent can be organic or inorganic. Inorganic coating agents can be one or more materials selected from alkaline and/or alkaline earth metal (particularly sodium or magnesium) salts of mineral or other inorganic acids. Typical examples include sulfate, carbonate, bicarbonate, phosphate and/or polymeric phosphates, silicates, borates and the corresponding boric acids. Particular combinations of coating agents include carbonate/silicate, and boric acid or borate with sulfate and the combination of a) sulfate, carbonate, carbonate/sulfate, bicarbonate, boric acid, borate, boric acid/sulfate, or borate/sulfate, with b) silicate. Preferably, the inorganic coating agent contains sodium silicate, sodium borate, boric acid, sodium carbonate, sodium sulfate, magnesium sulfate or one of their mixtures.

In the process of the invention, the solids which release oxygen when decomposing are generally stored at surrounding temperature, which will usually vary from 10 to 65°C. Preferably, the solids are stored at a storage temperature of below 40°C, more preferably below 30°C. For example, the solids which release oxygen when decomposing can be stored at surrounding temperature from 10 to 30°C. In case of extreme ambient temperatures, it is advisable that the oxygen concentration measurements are done continuously, for example with a purge of dry air having a velocity of 0,5 m/s across any openings to atmosphere.

In the process of the invention, the bulk containers may be stationary or transportable, vertically or horizontally arranged, such as silos and bunkers for bulk material. The volume of the bulk containers is usually from 1 to 800 m3, in many cases from 10 to 250 m3. Preferably, the storage containers are vertically standing silos having in most cases a bulk material capacity of from 10 to 250 m3. Usually, the silo has a maximal diameter of 4 meters, preferably of 3 meters.

In case a gas-purge is passed through the bulk container in the process of the invention, it is generally introduced at one side by means of one or more feed devices and, after passage through the stored material, is led away at the opposite side. Preferably, the gas-purge is introduced in the lower region of the bulk container and is led away at the top of the container. For example, the bulk container is a vertically standing silo and the gas-purge to be passed through the bulk container is introduced in the lower region of the vertical bulk container and is led away at the top of the container.

In case a gas-purge is passed through the bulk container, the gas-purge flow is in general at least 101/t.h, in particular at least 301/t.h, values of at least 501/t.h giving good results. The gas purge flow is usually at most 20001/t.h, in many cases at most 10001/t.h, values of at most 5001/t.h being common. Suitable ranges for the gas-purge flow are from 50 to 20001/t.h, preferably from 50 to 5001/t.h, for example 2501/t.h. As used herein, the term "1" is an abbreviation for "liter" and means 1 liter of dry air at standard conditions of 1013 mbar and 20°C. The term "t" stands for tons of oxygen releasing substance and the term "h" stands for "hours". The gas-purge can be passed continuously or periodically through the solid stored in bulk. Continuous gas-purge is recommended.

In case a gas-purge is passed through the bulk material, it will usually have an inlet temperature around or below the set storage temperature. Accordingly, the inlet temperature will be of at least 5°C, preferably at least 10°C, more preferably at least 15°C. The inlet temperature of gas-purge will in general be at most 40°C, in particular at most 30°C, more particularly at most 20°C. It is especially advantageous that the temperature of the gas introduced as the gas-purge is in the range from 5 to 30C°.

The gas constituting the gas-purge can contain an inert gas, such as nitrogen. The gas preferably contains dry air. Dry air is intended to mean air whose dew point is below -20°C, preferably below -30°C. Dry air having a dew point temperature in the range from -30 to +10°C, for example from -20 to 0°C, may also be used, provided that the dew point temperature is below the surrounding temperature to avoid condensation.

In case a gas-purge is passed through the bulk material, the level of the oxygen concentration is in most cases measured in or near the gas-purge outlet.

Assuming a gas-purge of 20 m3/h through a silo filled with 100 tons of percarbonate, an increase of oxygen concentration by 1% would mean an oxygen production of 200 1/h. 2001 of oxygen are produced from about 2 kg sodium percarbonate. This rough calculation shows that, according to this invention, a 2 kg per hour decomposing sodium percarbonate can be detected.

In a further embodiment, the process of the invention can include measuring a temperature at a position inside the solid stored in bulk, passing a periodic or continuous flow of air through the container when a rate of increase of the temperature inside the solid is within a range of 0.5 to 10°C per day, and then discontinuing the flow of air through the container when the rate of increase decreases to less than -0.5°C per day. This temperature measurement is described in US 6,595,008. This further embodiment leads to an advantageous method for the detection and control of slow and fast decompositions which can occur in solids stored in bulk and which release oxygen when decomposing.

The process of the invention enables the monitoring of solids which release oxygen when decomposing and which are stored in bulk, detecting very quickly fast decompositions of such solids, even in local spots, which would not have been detected with simple temperature measurements. Indeed, as solids such as sodium percarbonate are good insulators, temperature measurements are not able to detect local fast decompositions.

The present invention is therefore also related to the use of the process of the invention for the safe storage of solids which release oxygen when decomposing and which are stored in a bulk container closed to the ambient atmosphere.

The present invention also relates to a bulk container closed to the ambient atmosphere equipped with an oxygen-detector. The use of such containers is especially suitable for the storage of solids which release oxygen when decomposing. In case a gas-purge is to be passed through the bulk material, such container is equipped with an inlet and an outlet for the gas-purge. The oxygen-detector can then be located in or near the gas-purge outlet.

The present invention is further illustrated below without limiting the scope thereto.

### Description of the drawings:

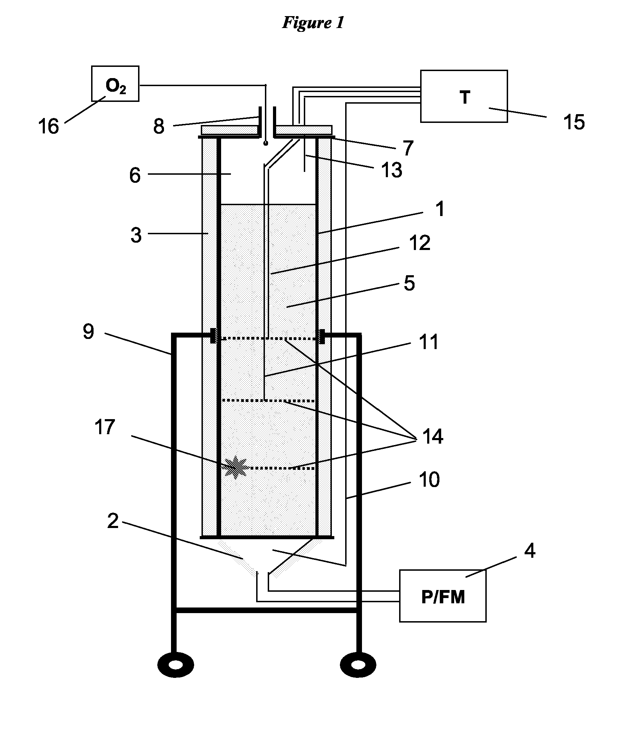

Figure 1 describes the test silo used to conduct the experiment described in the example below. The test silo is composed of a cylindrical length of stainless steel pipe (1) and, below it, a conical air inlet region (2) for gas-purge flow. The volume of gas-purge flow through the bulk is controlled by a pressure and flow meter unit (4). The stainless steel vessel is insulated by a layer of glass wool with a thickness of 5 cm (3). The height of the silo is 120 cm. The inside diameter of the silo is 30 cm. The test silo is filled with sodium percarbonate (5), the height of the bulk being 75 cm. The part of the test silo above the stored solid contains a gaseous atmosphere and is called the headspace (6). The top of the test silo is flanged by a lid (7) fitted with an air outlet (8). The test silo is fixed in a mobile carrier (9) for transport reasons. Temperatures at different levels of the silo are monitored by means of four centered temperature probes of Type K (NiCrNi): a first one (10) in the air inlet region (2), a second one (11) reaching the first third of the bulk silo at a height of 40 cm, a third one (12) reaching the center of the bulk silo at a height of 60 cm, and a fourth one (13) in the headspace (6) of the test silo at a height of 105 cm. The temperature probes in the bulk are fixed in plastic cross stripes with drilled holes at defined positions (14). The temperature data are collected by data logger device (15). The oxygen concentration is monitored by means of an oxygen detector X-am 7000 from DRAEGER. The detector is fitted with XS R 02 LS sensor with a measuring range from 0 to 25 Vol% O₂ (16) located in the headspace (6). The star mark (17) in the bulk represents any local contamination exemplarily.

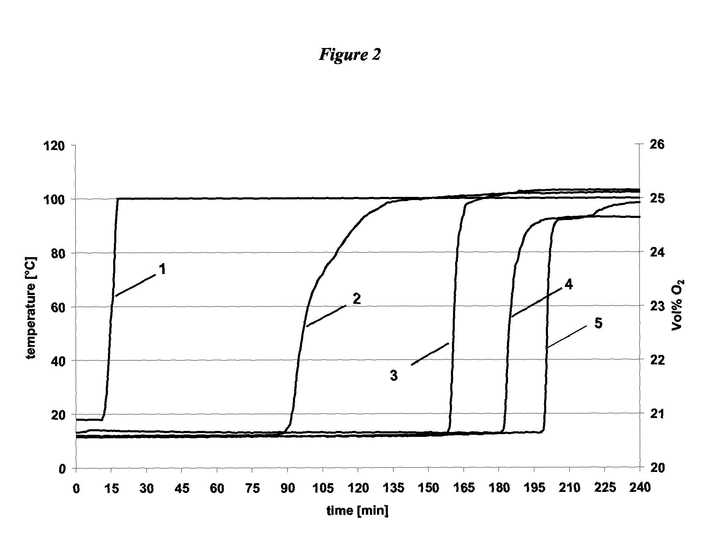

Figure 2 shows the curves illustrating the oxygen concentration (Vol%) of the air-purge at the outlet of the silo and the local temperatures (°C) measured at four different points of the silo. Curve 1 shows the oxygen concentration (Vol%) measured at the outlet of the test silo. Curve 2 shows temperature measurement done by the temperature probe (11), located at a height of 40 cm in the test silo. Curve 3 shows temperature measurement done by the temperature probe (12), located at a height of 60 cm in the test silo. Curve 4 shows temperature measurement done by the temperature probe (13) located in the headspace (6) of the test silo. Curve 5 shows temperature measurement done by the temperature probe (10), located in the air inlet region (2) of the test silo.

The decomposition was started at t=0.
Example (comparative and according to the invention):

The process according to the invention was tested in the experimental silo described in Figure 1, in which 54 kg of sodium percarbonate were loaded. During the experiment, a gas-purge of dry air (*dew point = -70°C*) was passed continuously through the bulk from the bottom to the top of the silo with a flow of 201/h. The temperature inlet of the gas was *12°C.*

A local decomposition of the sodium percarbonate was initiated by the injection, in the bottom of the column (height = 20 cm), through a small pipe, of 200 ml of a solution of 1000 ppm CuSO4 in hot water (around 95°C). The distance from this area to the closest temperature probe (11) was about 25 cm

Some minutes after the addition of this initiator, the oxygen concentration measured in the headspace increased from 21% to above 25%, showing oxygen production related to the decomposing sodium percarbonate (Figure 2, curve 1).

With regard to temperature measurements (Figure 2, curves 2 to 5), the first indication of decomposing sodium percarbonate was given about 90 minutes after the beginning of the decomposition, by the closest temperature probe (11) (height = 40 cm, 25 cm from the local spot, curve 2). The temperature raise was detected by the next temperature probe (12) (height = 60 cm, 42,7 cm from the local spot after more than 150 minutes (curve 3). The temperature rise in the headspace (13) after about 180 minutes (curve 4) and in the air inlet (10) after about 200 minutes (curve 5).

## Claims

1. - Process for the monitoring of solids which release oxygen when decomposing and which are stored in a bulk container closed to the ambient atmosphere, by measuring oxygen level.

2. - Process according to claim 1 in which the part of the bulk container above the stored solid contains a gaseous atmosphere, which is called the headspace, and wherein the oxygen concentration of the atmosphere in the headspace of the bulk container is measured.

3. - Process according to claim 1, wherein a gas-purge is passed through the solid stored in bulk and is released to the atmosphere through an opening made in a part of the closed bulk container, called outlet of the bulk container, said opening positioned away from that where the gas-purge is introduced, thereby allowing the gas-purge to escape via a passage through the mass of the solid stored in bulk into the atmosphere and wherein the oxygen concentration of the gas-purge is measured at or near the outlet of the bulk container.

4. - Process according to claim 3, wherein the gas constituting the gas-purge contains dry air.

5. - Process according to claim 4, wherein the dry air has a dew point temperature in the range from -30 to +10°C, preferably from -20 to +0°C.

6. - Process according to any one of claims 3 or 5, wherein the gas-purge is passed continuously or discontinuously through the solid stored in bulk.

7. - Process according to any one of claims 1 to 6, wherein the solid which releases oxygen when decomposing is chosen from sodium percarbonate, sodium perborate monohydrate or tetrahydrate, calcium peroxide, magnesium peroxide, zinc peroxide, or N,N'-phthaloylaminoperoxycaproic acid and formulations containing them.

8. - Process according to any one of claims 3 to 7, wherein the temperature of the gas introduced as the gas-purge is in the range from 5 to 30°C.

9. - Process according to any one of claims 3 to 8, wherein the gas-purge flow is in the range from 50 to 20001/t.h, preferably from 50 to 500 l/t.h.

10. - Process according to any one of claims 1 to 9, wherein the volume of the bulk container is from 1 to 800 m3, preferably from 10 to 250 m3.

11. - Process according to any one of claims 1 to 10 wherein the bulk container is a vertically standing silo and the gas-purge to be passed through the bulk container is introduced in the lower region of the vertical bulk container and is led away at the top of the container.

12. - Use of the process according to any one of claims 1 to 11 for the safe storage of solids which release oxygen when decomposing in a bulk container closed to the ambient atmosphere.

13. - Use of the process according to claim 12, wherein the solids are stored at a storage temperature of below 40°C, preferably below 30°C.

14. - Bulk container closed to the ambient atmosphere equipped with an oxygen-detector.

15. - Container according to claim 14 equipped with an inlet and an outlet for a gas-purge.

16. - Container according to claim 15, wherein the oxygen-detector is located in or near the gas-purge outlet.
